# EUROPEAN PATENT SPECIFICATION

(11) **EP 0 967 859 B1**
(45) Date of publication and mention of the grant of the patent: **21.05.2003**
(21) Application number: 98900942.8
(22) Date of filing: 22.01.1998
(51) Int. Cl.: A01L 7/10

(54) **HORSESHOE NAIL**
HUFBESCHLAGNAGEL
CLOU DE FER A CHEVAL

(30) Priority: 22.01.1997 GB 9701280
(43) Date of publication of application: 05.01.2000
(73) Proprietor: Save Edge Nail Worldwide Inc., Xenia, OH 45385 (US)
(72) Inventor: HEELEY, Peter, John, Newton, Powys SY16 2NP (GB)
(74) Representative: Warren, Anthony Robert
(86) International application number: GB9800193
(87) International publication number: WO98032331

(56) References cited:
- DE-C- 46 538
- DE-U- 29 604 676
- GB-A- 191 116 261

## Description

This invention relates to horseshoe nails and, more particularly, to a horseshoe nail in which at least a major portion of the nail shank is radiused or of arcuate cross section on one side to eliminate pressure points which can cause splitting and breaking, and to provide a nail which is smoother and may be driven with less friction than a conventional nail.

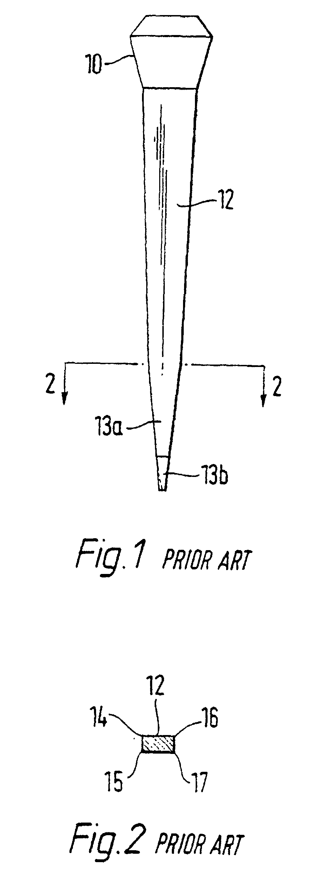

The conventional horseshoe nail is illustrated in Figs. 1 and 2 of the accompanying drawings and consists of a head 10 and a shank 12 terminating in a point 13. Since the head 10 is always within the recess of the horseshoe, itself, its configuration does not play a part in this invention and may, for example, be of the "city" type as illustrated, or may be of the European (E) type, as are conventional and well known to farriers. In the conventional nail, the shank 12 is rectangular or substantially rectangular throughout its length. This shank 12 terminates in tapered point 13a, which is tapered at the sides, and ending in a tip 13b which is tapered also on the face side. The back is conventionally flat. The sectional view Fig. 2, which is taken on the line 2-2 of Fig. 1, illustrates a cross-section of the shank where the point 13 joins the shank 12. It will be seen that four discrete corners are formed at 14, 15, 16 and 17. The pressure on the hoof is inherently concentrated at these corners, and since the shank forms a correspondingly shaped recess in the hoof, the stress in the hoof is similarly concentrated at the location of the recess corresponding to these corners. These stress concentration points or regions often cause unwanted and damaging splitting in the hoof material. This is a particularly troublesome problem in the shodding of racing horses which require frequent reshodding.

GB-A-16261 and 28309/08 disclose a horseshoe nail with a grooved shank for the purpose of preventing pressure from being exerted upon the sensitive part of the hoof. This nail has a head, a shank and a point, the shank comprising a front wall and a concave back wall which are joined to each other by narrower side walls of substantially uniform width between the head and the point. The front wall is formed with a groove having a convex bottom surface between cutting edges which are intended to prevent the nail, when driven, from forcing or wedging the hoof inwardly.

The present invention consists in a horseshoe nail having a head, a shank and a point, the shank comprising front and back walls which are joined to each other by narrower side walls, characterised in that between the head and the point the front wall of the shank is of convex shape in cross section along substantially its entire length and tapers towards the back wall, and in that the shank side walls taper along their length between the head and the point.

The stress concentrations caused by the conventional nails are substantially reduced or eliminated by the improved nail of this invention in which two of the sharp corners are alleviated or eliminated and the inside or face surface of the nail may be smoothly radiused throughout the length of the shank, including the point. The sides of the shank, in the region between the point and the head, may also be slightly tapered and, throughout the shank, formed with a narrow flat region which has a height less than the total height as measured above the flat back surface of the shank. The combination of a radiused shank face blending into a small section of flat side throughout the length of the shank provides for a wide distribution of the wedging and splitting forces as the nail enters the hoof and, thereafter, in use. The result is reduced injuries due to hoof splitting and fractures.

The improved horseshoe nail according to this invention has the further advantage that it can be driven with less friction than the conventional nail and, when the improved horseshoe nail of this invention is removed, the opening which is formed is one which can close up more completely, thereby protecting the hoof from injury or infection due to dirt being driven into the old nail opening.

Hence, the invention provides an improved horseshoe nail which drives easier and causes minimum displacement of the hoof material and minimum damage to the hoof wall. The front or radially inner wall of the nail may be radiused throughout the length of the shank and joins to the flat back wall along a narrow side wall portion. The shank side walls are uniformly slightly tapered along their length, between the head and the point. The radius of the front wall may decrease at a uniform rate from a maximum at the head to a minimum at the point transition region.

The result is that the apex or the point of maximum thickness enscribed by the radius wall, at any station or position along the length of the nail shank, forms a straight line, and this straight line converges toward a line formed by the back wall. In this specification, the front wall of the nail is defined as the wall which is located closest to the center axis of the hoof, and therefore the back wall is defined as the wall closest to the hoof perimeter.

A preferred embodiment of the invention is characterised by a horseshoe nail having a radiused shank surface presented toward the center of the hoof, when properly inserted, in which the radiused surface has a changing radii beginning with the largest radius at location adjacent the head of the nail and the smallest radius adjacent the point, and changing uniformly along the length of the nail shank progressing from the head to the point, so that the apices of the radiused surface, at any transverse section all lie in a straight line, which line converges toward a straight line formed along the opposite flat surface of the nail. Further, each of the side walls of the shank are formed with a relatively flat transition area joining the radiused front side with the flat back, and beyond a short region at the head, this transition area remains relatively constant in height throughout the length of the shank. The flat transition area defines the side walls of the shank and these side walls are not truly parallel but are slightly wider or further spaced apart at the head than at the junction of the shank with the point. The radiused front surface continues along the major length of the point to the bevelled tip.

In order that the invention may be more readily understood, reference is made to the accompanying drawings, in which;-
Fig. 1 represents a top or plan view of a conventional nail,
Fig. 2 represents a transverse sectional view of the conventional nail shank at the transition region between the shank and the point.
Fig. 3 is a enlarged side view of the improved horseshoe nail according to this invention,
Fig. 4 is a top plan view of the nail of Fig. 3, and
Figs. 5, 6, 7, 8, 9 and 10 are respectively transverse sections through the nail taken generally along the lines 5--5, 6--6, 7--7, 8--8, 9--9 and 10--10 of Fig. 4.

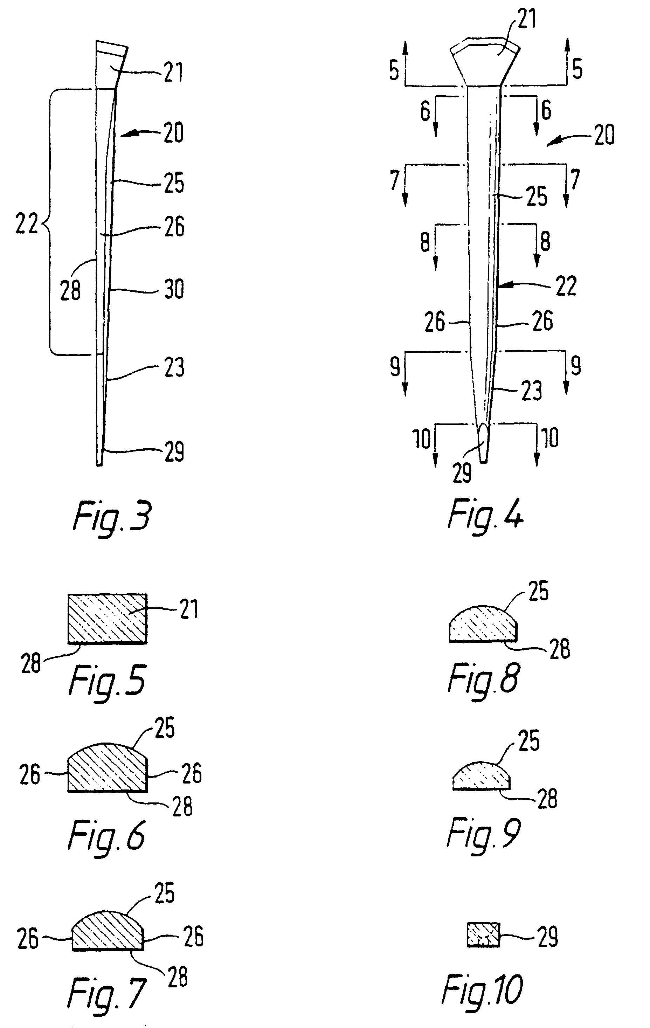

With reference to Figs. 3 through 10, the improved horseshoe nail 20 of this invention is shown as having a conventional city head 21. Alternatively, the head 21 may be conventionally formed as an E (European) head within the scope of this invention, or any variation thereof.

For the purpose of this invention, the nail shank 22 is defined as that portion of the nail extending between the head 21 and the point 23. The shank 22 is formed with a front wall 25 of convex arcuate section and, in this embodiment, it is radiused and of part circular section. Narrow flat side walls 26 join or transition the radiused front wall 25 with the flat back wall 28. The point 23 provides a tapered extension of the shank 22 and, itself, is terminated at a bevelled tip 29.

From the plan view of Fig. 4, it can be seen that the side walls 26 defining the side edges of the shank 22 are not truly parallel but taper slightly inwardly toward each other, being wider at the head 21 than at the junction with the point 23. The radiused front wall 25, at the apex of the radiused wall, also forms a straight line 30 (Fig. 3) which tapers toward the back wall 28, having the greatest thickness at the junction with the head and being somewhat thinner at the junction with the point 23, as seen respectively in the sectional view Figs. 6 and 9. The radiused curvature, at each of the sectional views, is preferably semi-cylindrical about a center point in common with the plane of the back wall 28, and the radii at each point or station along the length of the shank decreases uniformly from a maximum at the head 21, as seen in Fig. 6, to a minimum as seen in Fig. 9, with the radiused surface continuing substantially along the length of the point 23 to the bevelled tip 29.

The resulting improved horseshoe nail distributes the stress caused by the sharp pressure points of a conventional nail, substantially over a radiused or curved surface. The opening formed in the hoof material is not rectangular, but is substantially semi-circular, as represented by the cross-sectional views Figs. 6-9, and it is believed that this opening will close more readily and more completely than the rectangular opening formed by the conventional nail. Further, the gently sloping tapered side walls 26 combined with the gently sloping taper formed by the radiused wall 25 provides a nail which is easier to drive and causes a minimum of likelihood of splitting and breakage, while maintaining the shear strength of the conventional nail defined by the junction of the head 21 with the shank 20.

## Claims

1. A horseshoe nail having a head (21), a shank (22) and a point (23), the shank comprising front and back walls (25,28) which are joined to each other by narrower side walls (26), **characterised in that** between the head (21) and the point (23) the front wall (25) of the shank is of convex shape in cross section along substantially its entire length and tapers towards the back wall (28), and **in that** the shank side walls (26) taper along their length between the head and the point.

2. A horseshoe nail as claimed in claim 1, wherein the side walls of the point (23) have a larger taper than the side walls (26) of the shank.

3. A horseshoe nail as claimed in claim 1 or 2, wherein the radius of curvature of the front wall (25) decreases at a uniform rate from a maximum at the head end of the shank (22) to a minimum in the region of the transition from the shank to the point (23).

4. A horseshoe nail as claimed in claim 3, wherein the thickness enscribed by the convex front wall (25), at successive positions along the length of the shank (22), forms a straight line (30) which converges towards a line formed by the back wall (28).

5. A horseshoe nail as claimed in any preceding claim, wherein the convex front wall (25) is part circular in cross section.

6. A horseshoe nail as claimed in claim 5, wherein the front wall (25) has a changing radii beginning with the largest radius at a location adjacent the head (21) and the smallest radius adjacent the point (23), said radius changing uniformly along the length of the shank from the head to the point so that the apex of the front wall, at any transverse section, lies on a straight line (30) which converges towards a straight line formed along the back wall (28).

7. A horseshoe nail as claimed in claim 5 or 6, wherein the centre of the part circular cross section of the front wall (25) is disposed in a plane common with the back wall (28) and the radii at each position along the length of the shank decreases uniformly from a maximum at the head end of the shank to a minimum adjacent the point (23).

8. A horseshoe nail as claimed in any preceding claim, wherein each side wall (26) is formed with a relatively flat transition area joining the convex front wall (25) and the flat back wall (28) and beyond a short region at the head end of the shank, said transition area remains relatively constant in height throughout the remaining length of the shank.

9. A horseshoe nail as claimed in claim 8, wherein the flat transition area defines the side walls (26) of the shank and said side walls are slightly wider or further spaced apart at the head end of the shank than at the junction of the shank with the point.

10. A horseshoe nail as claimed in any preceding claim, wherein the convex front wall (25) continues for a major portion of the length of the point (23) which terminates in a bevelled tip (29).

## Patentansprüche

1. Hufbeschlagnagel, der einen Kopf (21), einen Schaft (22) und eine Spitze (23) aufweist, wobei der Schaft eine Vorder- und eine Rückwand (25, 28) aufweist, die durch schmalere Seitenwände (26) miteinander verbunden sind, **dadurch gekennzeichnet, dass** die Vorderwand (25) des Schafts zwischen dem Kopf (21) und der Spitze (23) im Querschnitt im Wesentlichen entlang ihrer gesamten Länge konvex ist und zu der Rückwand (28) hin geneigt verläuft und dass sich die Seitenwände (26) des Schafts entlang ihrer Länge zwischen dem Kopf und der Spitze verjüngen.

2. Hufbeschlagnagel nach Anspruch 1, bei dem die Seitenwände der Spitze (23) eine stärkere Verjüngung aufweisen als die Seitenwände (26) des Schafts.

3. Hufbeschlagnagel nach Anspruch 1 oder 2, bei dem der Radius der Krümmung der Vorderwand (25) von einem Maximum am Kopfende des Schafts (22) zu einem Minimum im Bereich des Übergangs vom Schaft zur Spitze (23) gleichmäßig abnimmt.

4. Hufbeschlagnagel nach Anspruch 3, bei dem die durch die konvexe Vorderwand (25) vorgegebene Dicke an aufeinander folgenden Stellen entlang der Länge des Schafts (22) eine gerade Linie (30) bildet, die zu einer von der Rückwand (28) gebildeten Linie konvergiert.

5. Hufbeschlagnagel nach einem der vorstehenden Ansprüche, bei dem die konvexe Vorderwand (25) einen teilweise kreisförmigen Querschnitt aufweist.

6. Hufbeschlagnagel nach Anspruch 5, bei dem die Vorderwand (25) sich ändernde Radien aufweist, beginnend mit dem größten Radius an einer Stelle, die an den Kopf (21) angrenzt, bis zum kleinsten Radius, der an die Spitze (23) angrenzt, wobei sich der Radius gleichmäßig entlang der Länge des Schafts vom Kopf bis zur Spitze ändert, so dass sich der Scheitel der Vorderwand an jeder Querschnittsstelle auf einer geraden Linie (30) befindet, die zu einer entlang der Rückwand (28) gebildeten geraden Linie konvergiert.

7. Hufbeschlagnagel nach Anspruch 5 oder 6, bei dem das Zentrum des teilweise kreisförmigen Querschnitts der Vorderwand (25) in einer mit der Rückwand (28) gemeinsamen Ebene angeordnet ist und dass die Radien an jeder Stelle entlang der Länge des Schafts gleichmäßig von einem Maximum am Kopfende des Schafts auf ein Minimum an der Spitze (23) abnehmen.

8. Hufbeschlagnagel nach einem der vorstehenden Ansprüche, bei dem jede Seitenwand (26) mit einem relativ flachen Übergangsbereich, der die konvexe Vorderwand (25) und die flache Rückwand (28) und hinter einem kurzen Bereich am Kopfende des Schafts verbindet, ausgebildet ist, wobei die Höhe des Übergangsbereichs über die verbleibende Länge des Schafts relativ konstant bleibt.

9. Hufbeschlagnagel nach Anspruch 8, bei dem der flache Übergangsbereich die Seitenwände (26) des Schafts definiert und dass die Seitenwände am Kopfende des Schafts etwas breiter sind oder etwas weiter auseinander liegen als an der Verbindung des Schaftes mit der Spitze.

10. Hufbeschlagnagel nach einem der vorstehenden Ansprüche, bei dem die konvexe Vorderwand (25) sich über einen größeren Abschnitt, der in einem abgeschrägten Spitzenende (29) endet, der Länge der Spitze (23) fortsetzt.

## Revendications

1. Clou de fer à cheval comprenant une tête (21), une tige (22) et une pointe (23), la tige comprenant une paroi avant et une paroi arrière (25, 28) qui sont jointes l'une à l'autre par des parois latérales plus étroites (26), **caractérisé en ce qu'**entre la tête (21) et la pointe (23), la paroi avant (25) de la tige possède une section convexe sur essentiellement toute la longueur de la tige et se rétrécit en direction de la paroi arrière (28), et **en ce que** les parois latérales de la tige (26) se rétrécissent sur toute leur longueur entre la tête et la pointe.

2. Clou de fer à cheval, tel que revendiqué dans la revendication 1, dans lequel les parois latérales de la pointe (23) présentent un rétrécissement plus important que les parois latérales (26) de la tige.

3. Clou de fer à cheval, tel que revendiqué dans la revendication 1 ou la revendication 2, dans lequel le rayon de courbure de la paroi avant (25) diminue de façon régulière pour passer d'un maximum au niveau de l'extrémité de la tête de la tige (22) à un minimum dans la zone de transition de la tige à la pointe (23).

4. Clou de fer à cheval, tel que revendiqué dans la revendication 3, dans lequel l'épaisseur comprise dans la paroi avant convexe (25), en des positions successives sur la longueur de la tige (22), forme une ligne droite (30) qui converge vers une ligne formée par la paroi arrière (28).

5. Clou de fer à cheval, tel que revendiqué dans l'une quelconque des revendications précédentes, dans lequel la paroi avant convexe (25) possède une section transversale partiellement circulaire.

6. Clou de fer à cheval, tel que revendiqué dans la revendication 5, dans lequel la paroi avant (25) possède un rayon variable qui est maximal en un endroit situé à proximité de la tête (21) et minimal à proximité de la pointe (23), lequel rayon change de façon uniforme sur la longueur de la tige depuis la tête vers la pointe de sorte que le sommet de la paroi avant, en quelque section transversale que ce soit, se trouve sur une ligne droite (30) qui converge en direction d'une ligne droite définie le long de la paroi arrière (28).

7. Clou de fer à cheval, tel que revendiqué dans la revendication 5 ou la revendication 6, dans lequel le centre de la section partiellement circulaire de la paroi avant (25) se trouve dans le même plan que la paroi arrière (28), tandis que les rayons en chaque position sur la longueur de la tige diminuent de façon régulière pour passer d'un maximum au niveau de l'extrémité de la tête de la tige à un minimum à proximité de la pointe (23).

8. Clou de fer à cheval, tel que revendiqué dans l'une quelconque des revendications précédentes, dans lequel chaque paroi latérale (26) comprend une zone de transition relativement plate qui joint la paroi avant convexe (25) avec la paroi arrière plate (28) tandis que, au-delà d'une petite zone au niveau de l'extrémité de la tête de la tige, ladite zone de transition reste relativement constante en hauteur sur la longueur restante de la tige.

9. Clou de fer à cheval, tel que revendiqué dans la revendication 8, dans lequel la zone de transition plate forme les parois latérales (26) de la tige, lesdites parois latérales étant légèrement plus larges ou plus espacées au niveau de l'extrémité de la tête de la tige qu'au niveau de la jonction entre la tige et la pointe.

10. Clou de fer à cheval, tel que revendiqué dans l'une quelconque des revendications précédentes, dans lequel la surface avant convexe (25) se prolonge sur une grande partie de la longueur de la pointe (23) qui se termine en une extrémité biseautée (29).
